# EUROPEAN PATENT APPLICATION

(11) **EP 4 571 603 A1**
(43) Date of publication of application: **18.06.2025**
(21) Application number: 23216264.4
(22) Date of filing: 13.12.2023
(51) Int. Cl.: G06Q 10/00, G06Q 10/04, G06Q 10/08, G06Q 10/083, G06Q 10/0832, G06Q 10/087

(54) **A METHOD OF DETERMINING A PACKAGING SEQUENCE OF FOOD ITEMS**

(71) Applicant: Kitopi One SPV Limited, Abu Dhabi (AE)
(72) Inventor: Mudlaff, Lukasz, 32-406 Zakliczyn (PL); Witas, Lukasz, 34-340 Jelesnia (PL)
(74) Representative: Patrade A/S

(57) **Abstract**

The present invention relates to a computer-implemented method of determining a packaging sequence of multiple food items, said food item(s) being packaging comprising food, wherein each food item has a food item ID, wherein said multiple food items is associated to one order ID, said method comprising for each order ID:
- receiving the order ID and said multiple food item IDs;
- retrieving food item properties for each food item, preferably from a database,
- assigning a priority rank to each food item based on the retrieved food item properties,
- receiving packaging dimensions of one or more transport packaging, such as a bag, comprising at least a width and a length (X, Y) of a base packaging area of the transport packaging, such as the bottom of a bag, preferably also receiving a height (Z) of the transport packaging,
- assigning the base packaging areas as available platforms with available platform areas,
- determining an occupation area of each food item defined by a width and a length,
- generating a packaging sequence of the food items, by:
p. identifying the food item with the highest rank,
q. calculating available platform areas (X, Y) larger than or equal to the occupation area of the identified food item,
r. arranging the occupation area on the available platform area and deducting the occupation area from the available platform areas,
s. recalculating the available platform areas,
t. repeating steps a)-d) until every food item associated with the order ID is comprised in the packaging sequence or until the available packing areas are smaller than the occupation area of the identified food item.

## Description

### FIELD OF THE INVENTION

The present invention relates to a computer-implemented method of determining a packaging sequence of multiple food items, said food item(s) being packaging comprising food, wherein each food item has a food item ID, wherein said multiple food items are associated to one order ID, said method comprising for each order ID:
- receiving the order ID and said multiple food item IDs;
- retrieving food item properties for each food item, preferably from a database,
- assigning a priority rank to each food item based on the retrieved food item properties,
- receiving packaging dimensions of one or more transport packaging, such as a bag, comprising at least a width and a length (X, Y) of a base packaging area of the transport packaging, such as the bottom of a bag, preferably also receiving a height (Z) of the transport packaging,
- assigning the base packaging areas as available platforms with available platform areas,
- determining an occupation area of each food item defined by a width and a length,
- generating a packaging sequence of the food items, by:
   a. identifying the food item with the highest rank,
   b. calculating available platform areas (X, Y) larger than or equal to the occupation area of the identified food item,
   c. arranging the occupation area on the available platform area and deducting the occupation area from the available platform areas,
   d. recalculating the available platform areas,
   e. repeating steps a)-d) until every food item associated with the order ID is comprised in the packaging sequence or until the available packing areas are smaller than the occupation area of the identified food item.

### BACKGROUND OF THE INVENTION

Within the area of packaging, it is known to have predetermined packaging sequences. However, when handling multiple orders of food items, predetermined packaging sequences would not be either optimal nor functional, since the food items comprised in the food orders change per order and the food items within the order have different and unique requirements for being packed, so that the food in the orders are not damaged, are not spilled, have the correct temperature, etc., when received by the end-customer of the order.

Therefore, within the area of handling the packing of unique food orders, an optimized packaging sequencing method is requested. The method requested is preferably a computer-implemented method determining a unique packaging sequence for each of a variety of food orders, such that unique food items within the food orders can each be handled accurately according to the requirements of the food items.

Hence, an improved computer-implemented method of determining a packaging sequence of multiple food items would be advantageous.

### OBJECT OF THE INVENTION

It is an object of the present invention to provide an alternative to the prior art.

In particular, it may be seen as an object of the present invention to provide a computer-implemented method of determining a packaging sequence of multiple food items that solves the above-mentioned problems.

### DESCRIPTION OF THE INVENTION

Thus, the object described above and several other objects are intended to be obtained in a first aspect of the invention by providing a computer-implemented method of determining a packaging sequence of multiple food items, said food item(s) being packaging comprising food,
wherein each food item has a food item ID,
wherein said multiple food items are associated to one order ID,
said method comprising for each order ID:
   - receiving the order ID and said multiple food item IDs;
   - retrieving food item properties for each food item, preferably from a server, such as a database,
   - assigning a priority rank to each food item based on the retrieved food item properties,
   - receiving packaging dimensions of one or more transport packagings, such as a bag, comprising at least a width and a length (X, Y) of a base packaging area of the transport packaging, such as the bottom of a bag, preferably also receiving a height (Z) of the transport packaging,
   - assigning the base packaging areas as available platforms with available platform areas,
   - determining an occupation area of each food item defined by a width and a length,
   - generating a packaging sequence of the food items, by:
      f. identifying the food item with the highest rank,
      g. calculating available platform areas (X, Y) larger than or equal to the occupation area of the identified food item,
      h. arranging the occupation area on the available platform area and deducting the occupation area from the available platform areas,
      i. recalculating the available platform areas,
      j. repeating steps a)-d) until every food item associated with the order ID is comprised in the packaging sequence or until the available packing areas are smaller than the occupation area of the identified food item.

The invention is particularly, but not exclusively, advantageous for providing a computer-implemented method, wherein when handling multiple orders of food items, the food items are being packed, so that they are not damaged, are not spilled, have the correct temperature, etc., when received by the end-customer of the order.

Furthermore, the packaging sequence provided by the method is using as much space as possible from the packaging, such as a bag, such that as few bags as possible must be used when packing an entire order. Thereby the method provides a sustainable packaging sequence.

It should be understood that the consumer/customer may place their orders through a number of different mobile smart devices installed with an user application, such as an app on a mobile phone.

Within the invention, it should be understood that the order may be received as an external data input.

The order comprising food items can be made by consumers via a customer platform, such as an app on a mobile device.

The order may thereby be received from external software and then be assigned a food order ID in the method of the invention.

In the context of the present invention, it should be understood that "food item" is a food packaging, such as a box, a bowl, paper/wrap, or any desired packaging for food, wherein the packaging comprises a prepared/cooked food product, such as a burger, pizza, salad, sandwich, or any food placed in an order.

In the context of the present invention, it should be understood that "ID" can be various IDs, such as a bar code, a matrix code, a QR code, Radio Frequency ID, etc. The invention should not be limited to a specific type of ID.

The ID of the invention may at least be representing or comprising information about the food item, such as the type of food packaging and/or the dimensions of the food packaging, the ID may comprise information on the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

Within the invention, "highest" rank should be understood as the food item having the rank to be packed first or packed before other food items in an order.

Within the invention, "transport packaging" may be a bag or any other suitable article for packing of food items.

Also, it should be noted that the packaging, such as a bag, may be extendable in the form and size, such as being elastic.

In one embodiment of the invention the retrieved food item properties include at least one or more, preferably all, of the following:
- dimensions of the width and length (W, L) of the packaging,
- dimension of the height (H) of the packaging,
- weight of the food item, such as heavy or lightweighted,
- stacking ability of the food item, such as stackable or non-stackable,
- the texture of the food, such as fluid or solid,
- temperature of the food item, such as hot or cold,
- material and/or strength of the material,
- being oversized, such as being oversized or not being oversized.

The embodiment is particularly, but not exclusively, advantageous for having a server, such as a database, from which various unique properties can be retrieved. The more properties of the food items, the better the packaging sequence can be determined.

A further property may be how fast a sorting/picking unit, such as a robotic picking assembly, can move with the food item.

Within the context of the invention, the "stacking ability" may be defined in multiple ways. A preferred definition is whether or not the food item is stackable or non-stackable. That may be defined by information of the food item being flat on the top or not flat on the top. Is the food item flat on the top, it may be stackable, and it may thereby be used as a bottom for a stack of food items. Is the food item not flat on the top, but comprises some kind of protrusions or a curved top, it may not be stackable, and may therefore be defined as an item that should be packed on top of other items or in the bottom of a bag with no other items stacked above, depending on the other food properties of the food item.

It should be noted that many other definitions of stackable or non-stackable may be used within the invention.

Also, it should be understood that the stacking ability can be a property both for being stackable from the top and/or from the bottom.

Being stackable from the top may be understood as the food item is suitable for having another food item stacked on top.

Being stackable from the bottom may be understood as the food item is suitable for being stacked upon another food item.

In one embodiment of the invention, in case the available packing areas are smaller than the occupation area of the identified food item, the method further comprises the step of:
- adding an additional transport packaging, and
- assigning the width and length dimensions (X, Y) as an additional available platform with available platform area, and
- repeating steps a)-d).

The embodiment is particularly, but not exclusively, advantageous for providing a method wherein the specific platform area for packaging food items is available.

The information may be retrieved from a server, such as a database.

There are several reasons why an additional bag may be added, such as:
If one bag is added from the start and has been fully packed. An additional new bag can be added if a further food item is to be packed in the order and there is no more available packaging area, i.e. available space in the bag.

Also, there may be added an additional bag before the packaging of food products has started.

The reason for adding an additional bag may be missing available area/space for packaging. It may also be due to the difference in temperature of the food items in the order to be packed. As an example, an ice crem and a cup of warm soup should preferably not be packed in the same bag, but in two different bags.

In one embodiment of the invention, in case the available packing areas are smaller than the occupation area of the identified food item, the method further comprises the step of:
- assigning the width and length dimensions (X, Y) of a top of a sorted food item as available platform with available platform area, and
- repeating steps a)-d).

The embodiment is particularly, but not exclusively, advantageous for obtaining further available packaging area within a bag even though the bottom of the bag has been at least substantially fully packed with food items. If a food item has the property of being stackable, it provides an additional available platform area for packing another food item upon it. In that way such packaging sequence allows a sequence where not only the bottom area of a bag is used for packaging area, but also packaging in the height is allowed.

The top of the food item with the property of being stackable (from the top) is thereby assigned as an additional potential packaging area/platform.

The food item to be stacked upon an already packed food item may also have the property of being stackable (from the bottom).

In one embodiment of the invention, the packaging dimensions include packaging dimensions of intermediate platforms being available platform areas within a transport packaging, such as a new level within a bag, and where in the method further comprises the step:
- assigning one or more additional intermediate platform dimensions (X, Y) as an available platform with available platform areas,
wherein the intermediate platform is positioned in a transport packaging upon already packed food item(s).

The embodiment is particularly, but not exclusively, advantageous for obtaining further available packaging area within a bag even though the bottom of the bag has been packed with food items. If a food item has the property of being stackable, it provides an additional available platform area for packing another food item upon it. In that way, such packaging sequence allows a sequence where not only the bottom area of a bag it used for packaging, but also packaging in the height is allowed.

Within the invention the intermediate platform can be constructed in a variety of embodiments. It can be made in various materials. It can be shaped in various shapes. It can have various properties, such as strength properties etc.

One example of an intermediate platform is a piece of carton.

In one embodiment of the invention the intermediate platform is provided by one or more food items, said food items being stackable, by assigning the top of the food item as an available platform with an available platform area and a height (z).

The embodiment is particularly, but not exclusively, advantageous for providing a packaging sequence allowing to perform a sequence where not only the bottom area of a bag it used for packaging, but also packaging in the height is allowed.

In one embodiment of the invention, an algorithm is configured for assigning a priority rank to each food item based on the retrieved food item properties.

In one embodiment of the invention the algorithm has the priority rank of the food items, starting with the highest ranked property:
- stacking ability,
- material and/or material strength,
- weight,
- temperature,
- texture.

The embodiment is particularly, but not exclusively, advantageous for providing the optimal packaging sequence, wherein any important property of a food item has been taken into account.

It is essential to understand that this rank may be one of many different potential rankings. The ranking of properties may change. Therefore, this ranking should not necessarily be seen as a limitation to the invention.

In a preferred embodiment, a stackable food item is to be ranked highest. All food items being stackable would be assigned a higher rank than the non-stackable food items.

In a preferred embodiment, a lightweight stackable food item is higher ranked than a heavy and stackable food item.

It should be noted that within the invention more properties may be added and be a part of the priority rank. Also there may be embodiments of the invention where not all of the above highlighted properties are a part of the ranking. The above properties should be seen as preferred ranked properties.

In one embodiment of the invention the method further comprises the steps of:
- assigning oversized food items as non-packaging, and/or
- leaving out oversized food items.

The embodiment is particularly, but not exclusively, advantageous since no food item is too big to be handled, although a food item can be too big to be packed, and thereby be assigned as oversized. The oversized food items will be handled and packed separately.

The definition of oversized items may depend on at least the transport packaging, such as the bags to be packed in.

In one embodiment of the invention the method further comprises the step of:
- assigning a separate packaging area for oversized food items.

In one embodiment of the invention, when generating the packaging sequence, the step of arranging the food item comprises positioning the food item as close as possible to a corner of the transport packaging.

In one embodiment of the invention the method further comprises the steps of:
- providing a decentralized position of a packed order with an order ID, and/or
- providing a repositioned centralized position of the packed order, and/or
- preferably sending the final position of the packed order to a pick-up and/or delivery system.

The embodiment is particularly, but not exclusively, advantageous for providing a method, wherein a decentralized position of the packed order is provided when the order has been fully packed, such that all food items of an order are handled and packed.

The decentralized position may be a packaging central/station.

The packed food order is preferably repositioned to a centralized position, such that the order can be picked up. The centralized position may by a pick-up central/station. When the order is at the pick-up station, it may be seen as the final position before it is picked up and delivered to the end-customer. Therefore, it is preferred that the position of the order is sent out, such that the order can be picked-up as soon as possible.

In one embodiment of the invention the method further comprises the steps of:
- providing a machine-learning model for improving the determination of a packaging sequence of food items, and
- training the machine-learning model.

The embodiment is particularly, but not exclusively, advantageous for providing a method being improved every time a food order comprising food items is handled.

Preferably, at least the priority ranking of each food item based on retrieved food item properties is improved.

In a second aspect of the invention is provided a system for handling one or more associated food item(s) with an associated ID, such as a packaging comprising food, said system comprising:
- a reader, such as a scanner, configured for reading the ID of the food item,
- a conveyor, preferably a plurality of conveyors, for transporting the associated food items to a temporary storage area,
- a temporary storage area, preferably being a rotatable table, preferably circular,
- a sensor, preferably positioned at an arbitrary position along the conveyor, such as a photocell,
- a vision system, such as a vision camara, for capturing information from the storage area,
- a package area, such as a tray, and/or or a package object, such as a bag,
- a robotic arm for repositioning the food item from the storage area to the package area and/or the package object,
- a control system, for controlling the robotic arm based on input from at least the vision system, preferably also inputs from a controller.

The invention is particularly, but not exclusively, advantageous for providing a system wherein the method of determining a packaging order can be executed.

Furthermore, a system is provided, wherein food items from numerous different brands/kitchens can be placed and gathered in one order.

The system is a fully automated system from the time when the food order is placed by a customer/consumer to the time when the food order is ready for delivery in one gathered order/delivery. The food may be automatically prepared, such as cooked and/or made by robots, however, manual preparing/cooking is preferred.

It should be understood that the consumer/customer of the system may place their orders through a number of different software and platforms, such as an app.

In the context of the present invention, it should be understood that "food item" is a food packaging, such as a box, a bowl, paper/wrap, or any desired packaging for food, wherein the packaging comprises a prepared/cooked food product, such as a burger, pizza, salad, sandwich, or any food placed in an order.

In the context of the present invention, it should be understood that "ID" can be various IDs, such as a bar code, a matrix code, a QR code, Radio Frequency ID, etc. The invention should not be limited to a specific type of ID.

The ID of the invention may at least be representing or comprising information about the food item, such as the type of food packaging and/or the dimensions of the food packaging.

Furthermore, the ID may comprise information on the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

The reader, such as a scanner, is configured for reading the ID of the food item when the food item is prepared and thereby ready (e.g. for pick-up or delivery). The scanner provides the opportunity to make a connection of the different food items and the gathered order, and thereby knowing when the full order is ready.

The at least one conveyor of preferably a plurality of conveyors in the system provides an easy, efficient and reliable transportation/distribution/movement of the associated food item, when the food product is prepared and positioned into a packaging, such as a box, a bowl, paper/wrap, etc., and should be moved from the kitchens to allow new food products to be prepared in the kitchens.

The temporary storage area, preferably being a rotatable table, and preferably circular, provides an area wherein the food being prepared and ready for being packed into orders can temporarily be stored while the rest of the order is prepared. Thereby, instead of having food stored in the kitchens and occupy space in the kitchens, the food items can temporarily be stored in this area. Also, the area makes it possible to easily sort several food items into different orders.

The sensor, such as a photocell, provides information on a food item before it enters the storage area, and thereby provides a system which only requires an extremely small temporary storage area compared to the amount of food items being handled in the system. It should be understood that the system can include a plurality of sensors, however, at least one sensor.

The vision system, such as a vision camera, provides the possibility of capturing information on the food items positioned at the storage area. The food items are each provided with an ID, and the vision system is at least capable of obtaining information from these different IDs and thereby automatically collect and sort the items into the right gathered order. The system may also be able to obtain information on the food item, such as shape and dimensions without the ID.

In the context of the present invention, it should be understood that the vision system may be both a 2D and/or 3D vision system. The robotic arm provides the opportunity to automatically reposition the food item from a storage area to the package area and/or the package object and automatically collect and sort the food item into a finished order.

It should be understood that "robotic arm" might be an end of arm tooling or the like.

The package area may be the final area/destination of the system, wherein an order is collected into one gathered order comprising one or more food items.

The control system provides at least the controlling of the robotic arm, such that the orders can be correctly collected and sorted into one gathered order. The control system is based on input from at least the vision system. Preferably, the control system would also be provided with inputs from the scanner and/or the sensor and/or other relevant elements connected to the system.

It should be understood that the control system may comprise a controller.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
Figure 1 illustrates a flow-diagram of setting a packing rank.
Figure 2 illustrates an example of priorities for food item properties.
Figure 3 illustrates an overall method with a packaging algorithm.
Figure 4 illustrates potential first steps of a method with a packaging algorithm.
Figure 5 illustrates steps for packaging handling.
Figure 6 illustrates further steps for packaging handling.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

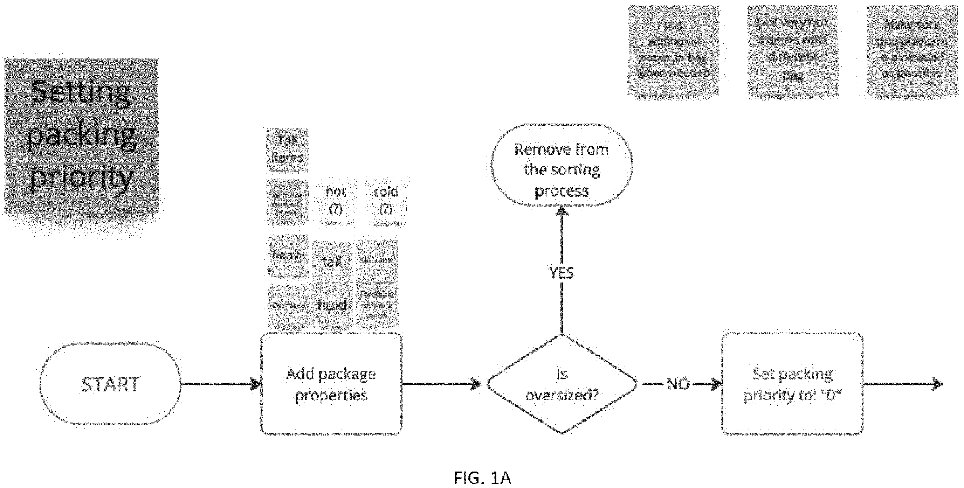

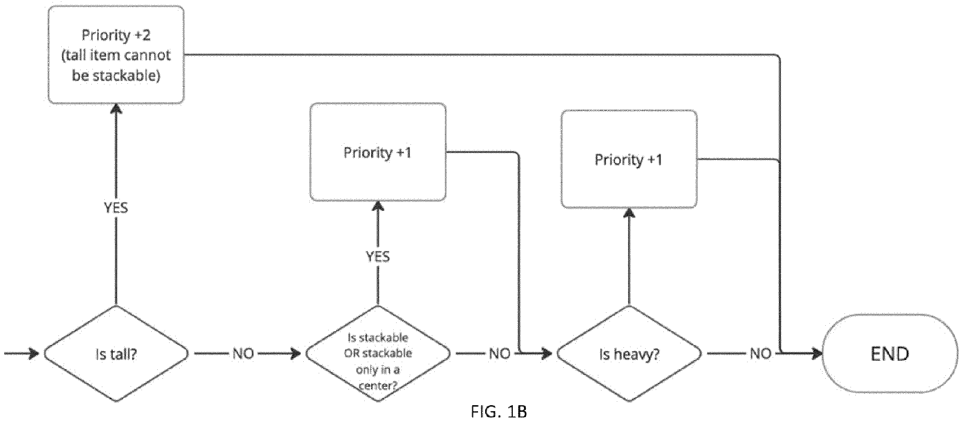

FIG. 1 illustrates a flow-diagram of setting a packing rank.

The first step illustrated in FIG. 1 of the method is to add packaging properties for each food item in a food order. These properties are preferably retrieved from a server, such as a database. Each food item has a food item ID, and from the food item ID the server can provide the properties of the food items.

In FIG. 1 some properties are proposed, however, it should be understood that the invention is not limited to the illustrated properties:
- Stackable, heavy, hot/cold, fluid, tall, oversized, speed of moving robot (arm).

The second step illustrated in FIG. 1 of the method is to determine if the food item is oversized. Is it oversized it is preferably removed from the sorting process. The removal does not mean the food item is no longer a part of the food order, but just that the oversized food item should not be packed into the same packaging as the rest of the food items of the order.

The third step illustrated in FIG. 1 of the method is to start setting the priority ranking. All items start with a priority 0, if it is not determined to be oversized.

The fourth step illustrated in FIG. 1 of the method is to handle the different properties.

The first property illustrated in this example is if the food item is "tall". If it is tall, the priority will as an example go from 0 to +2, since tall items in this example are not assessed as stackable. And therefore, the tall item should be packed in the bottom of a bag and thereby be packed as one of the first items.

The second priority illustrated in this example is if the food item is "stackable". If it is stackable, the priority will as an example go from 0 to +1.

Therefore, the stackable item will get a higher priority, sine it should be packed in the bottom of a bag and thereby be packed as one of the first items.

The third priority illustrated in this example is if the food item is "heavy". If it is heavy, the priority will as an example go from 0 to +1.

Therefore, the heavy item will get a higher priority, sine it should be packed in the bottom of a bag and thereby be packed as one of the first items.

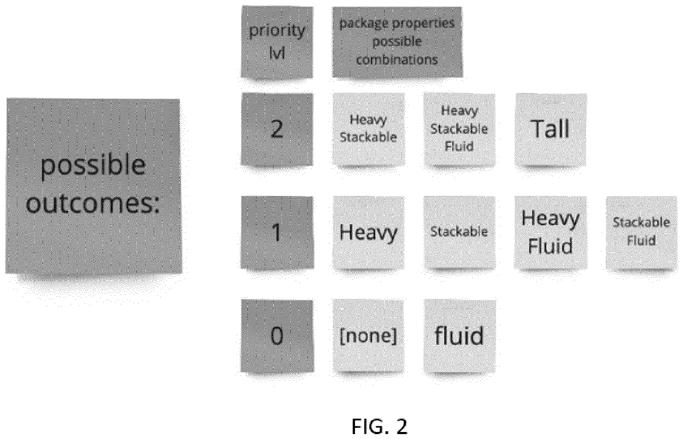

FIG. 2 illustrates an example of priorities for food item properties.

It should be understood that this is only one example of priorities and only examples of properties. There may within the invention be other priorities and other properties.

Having a high priority assigned means that the food item should be packed as the first or one of the first items.

In this example the highest priorities (+2) are given for the properties:
- Heavy and stackable
- Heavy, stackable and fluid,
- Tallness (is the item very high)

In this example the second highest priorities (+1) are given for the properties:
- Heavy/weight,
- Stackable,
- Heavy/weight and fluid,
- Stackable and fluid

In this example the lowest priorities (+0 or no priority) are given for o the properties:
- fluid,
- none.

It should be understood that there can be several of further priority ranking. There could be rankings with +1, +2, +3, +4, +5, +6, +7, +8, +9, +10, etc. The ranking number should not be seen as limiting to the invention.

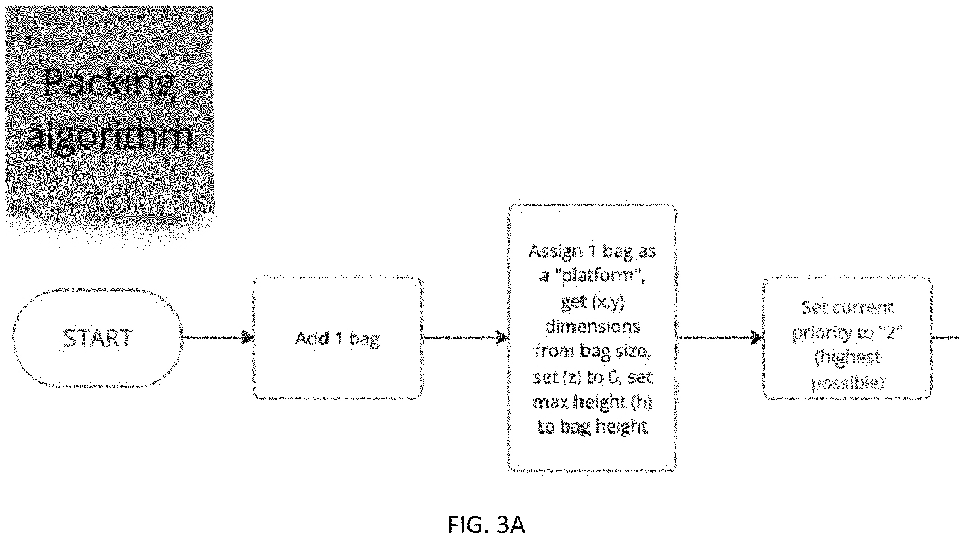

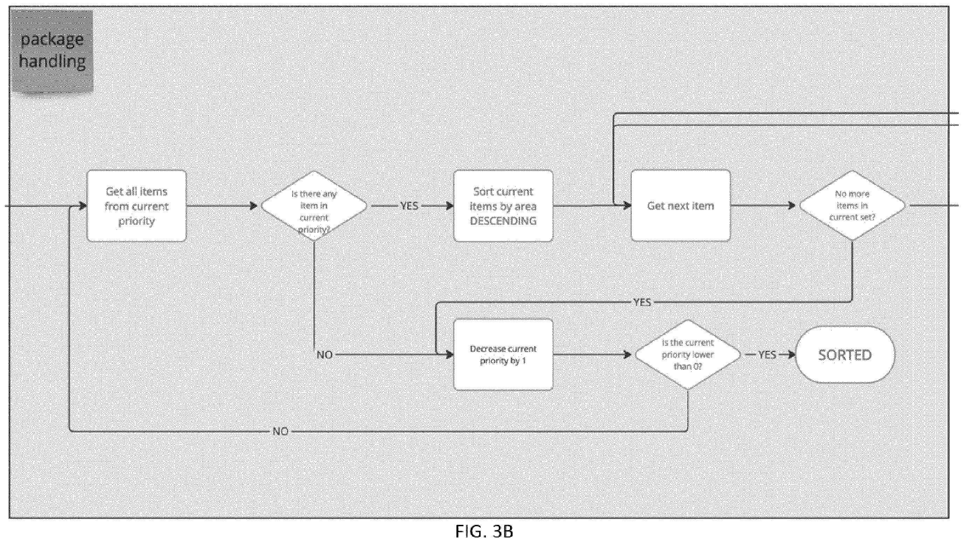

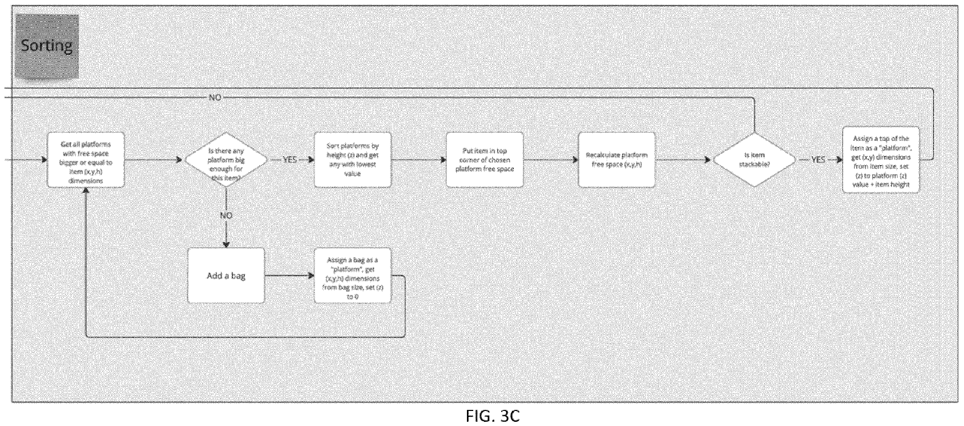

FIG. 3 illustrates an overall method with a packaging algorithm according to the invention, the method being a computer-implemented method of determining a packaging sequence of multiple food items, said food item(s) being packaging comprising food,
wherein each food item has a food item ID,
wherein said multiple food items are associated to one order ID,
said method comprising for each order ID:
   - receiving the order ID and said multiple food item IDs;
   - retrieving food item properties for each food item, preferably from a server, such as a database,
   - assigning a priority rank to each food item based on the retrieved food item properties,
   - receiving packaging dimensions of one or more transport packaging, such as a bag, comprising at least a width and a length (X, Y) of a base packaging area of the transport packaging, such as the bottom of a bag, preferably also receiving a height (Z) of the transport packaging,
   - assigning the base packaging areas as available platforms with available platform areas,
   - determining an occupation area of each food item defined by a width and a length,
   - generating a packaging sequence of the food items, by:
      ∘ identifying the food item with the highest rank,
      ∘ calculating available platform areas (X, Y) larger than or equal to the occupation area of the identified food item,
      ∘ arranging the occupation area on the available platform area and deducting the occupation area from the available platform areas,
      ∘ recalculating the available platform areas,
      ∘ repeating steps a)-d) until every food item associated with the order ID is comprised in the packaging sequence or until the available packing areas are smaller than the occupation area of the identified food item.

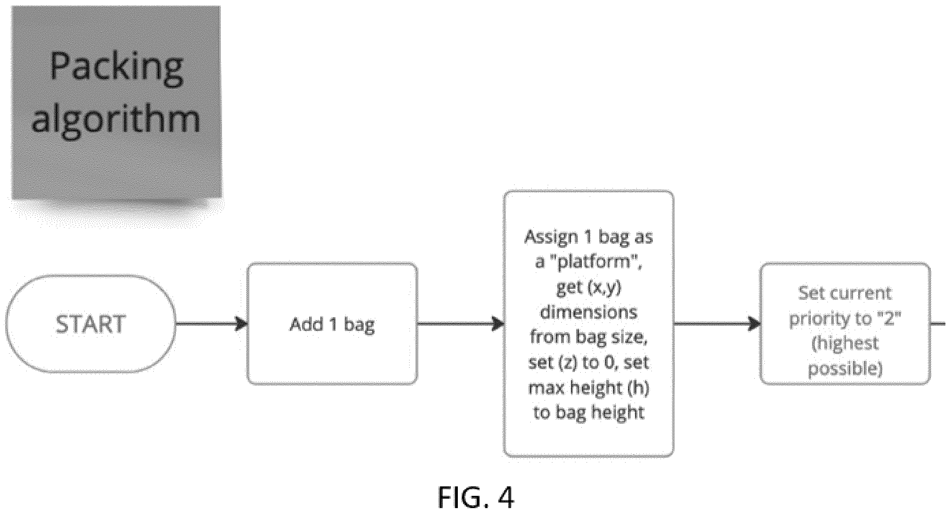

The three overall parts of the method are highlighted in FIG. 4, 5 and 6.

FIG. 4 illustrates potential first steps of a method with a packaging algorithm.

For a start a bag is added. The bag is assigned a platform area (X, Y), being dimensions of the size of the bottom of the bag. The height of the platform area (Z) is set to 0, since it is the bottom of the bag.

When the packaging is started, the priority is as an example set to 2, being the highest priority in the example, and therefore the food items with the highest priority is packed first and in the bottom of the bag.

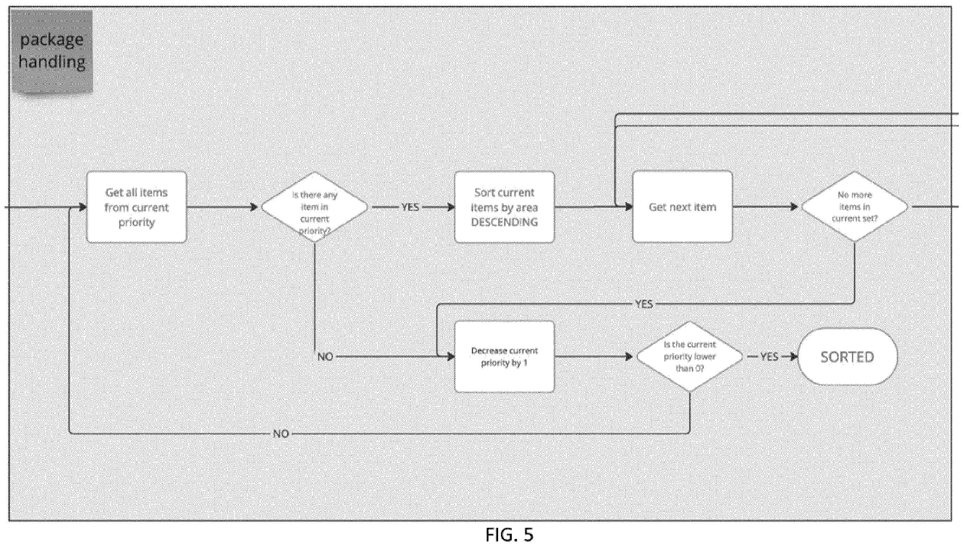

FIG. 5 illustrates steps for packaging handling.

The first step in this part is to ensure that all food items with the highest priority are packed before moving to a lower priority.

When all the food items with the highest priority are packed, the current priority is decreased to the priority 1. Thereby all food items, if any, with the priority 1 should be packed before moving to a lower priority.

When all the food items with the priority 1 are packed, the current priority is decreased to the priority 0. Thereby all remaining food items, if any, with the priority 0 should be packed as the last food items.

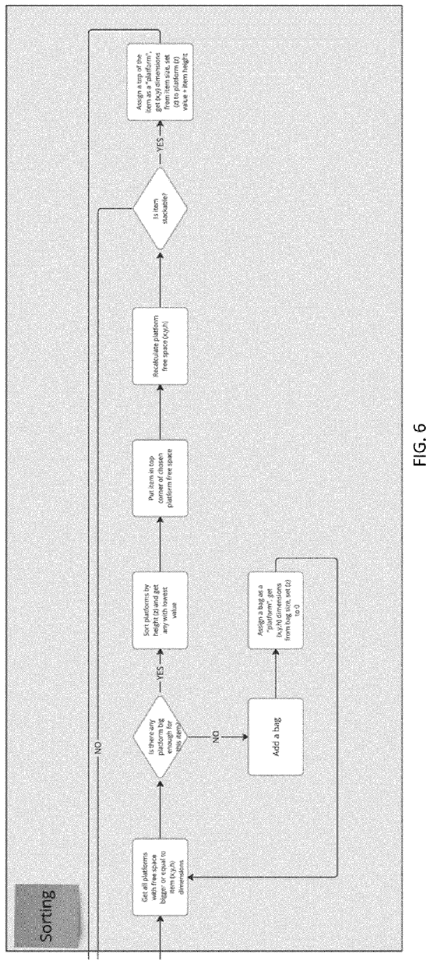

FIG. 6 illustrates further steps for packaging handling in case the available packing areas are smaller than the occupation area of the identified food item.

In such case the method further comprises the steps of:
- adding an additional transport packaging, such as a bag, and
- assigning the width and length dimensions (X, Y) as an additional available platform with available platform area.

And/or:
In case the available packing areas are smaller than the occupation area of the identified food item, the method further comprises the steps of:
- assigning the width and length dimensions (X, Y) of a top of a sorted food item as available platform with available platform area, and
- repeating steps a)-d).

An alternative, not illustrated:
The packaging dimensions include packaging dimensions of intermediate platforms being available platform area within a transport packaging, such as a new level within a bag, and wherein the method further comprises the step of:
- assigning one or more additional intermediate platform dimensions (X, Y) as an available platform with available platform areas,
   wherein the intermediate platform is positioned in a transport packaging upon already packed food item(s), and/or
   wherein the intermediate platform is provided by one or more food items, said food item being stackable, by assigning the top of the food item as an available platform with an available platform area and a height (z).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A computer-implemented method of determining a packaging sequence of multiple food items, said food item(s) being packaging comprising food,
wherein each food item has a food item ID, preferably stored in a server, such as a database,
wherein said multiple food items are associated to one order ID,
said method comprising for each order ID:
- receiving the order ID and said multiple food item IDs;
- retrieving food item properties for each food item, preferably from a server, such as a database,
- assigning a priority rank to each food item based on the retrieved food item properties,
- receiving packaging dimensions of one or more transport packaging, such as a bag, comprising at least a width and a length (X, Y) of a base packaging area of the transport packaging, such as the bottom of a bag, preferably also receiving a height (Z) of the transport packaging,
- assigning the base packaging areas as available platforms with available platform areas,
- determining an occupation area of each food item defined by a width and a length,
- generating a packaging sequence of the food items, by:
k. identifying the food item with the highest rank,
l. calculating available platform areas (X, Y) larger than or equal to the occupation area of the identified food item,
m. arranging the occupation area on the available platform area and deducting the occupation area from the available platform areas,
n. recalculating the available platform areas,
o. repeating steps a)-d) until every food item associated with the order ID is comprised in the packaging sequence or until the available packing areas are smaller than the occupation area of the identified food item.

2. A computer-implemented method according to claim 1, wherein the retrieved food item properties include at least one or more, preferably all, of:
- dimensions of the width and length (W, L) of the packaging,
- dimension of the height (H) of the packaging,
- weight of the food item, such as heavy or lightweighted,
- stacking ability of the food item, such as stackable or non-stackable,
- the texture of the food, such as fluid or solid,
- temperature of the food item, such as hot or cold,
- material and/or strength of the material,
- being oversized, such as being oversized or not being oversized,

3. A computer-implemented method according to any of the preceding claims, wherein, in case the available packing areas are smaller than the occupation area of the identified food item, the method further comprises the steps of:
- adding an additional transport packaging, and
- assigning the width and length dimensions (X, Y) as an additional available platform with available platform area, and
- repeating steps a)-d).

4. A computer-implemented method according to any of the preceding claims, wherein, in case the available packing areas are smaller than the occupation area of the identified food item, the method further comprises the steps of:
- assigning the width and length dimensions (X, Y) of a top of a sorted food item as available platform with available platform area, and
- repeating steps a)-d).

5. A computer-implemented method according to any of the preceding claims, wherein the packaging dimensions include packaging dimensions of intermediate platforms being available platform area within a transport packaging, such as a new level within a bag, and wherein the method further comprises the step of:
- assigning one or more additional intermediate platform dimensions (X, Y) as an available platform with available platform areas,
wherein the intermediate platform is positioned in a transport packaging upon already packed food item(s).

6. A computer-implemented method according to claim 5, wherein the intermediate platform is provided by one or more food items, said food item being stackable, by assigning the top of the food item as an available platform with an available platform area and a height (z).

7. A computer-implemented method according to any of the preceding claims, wherein an algorithm is configured for assigning a priority rank to each food item based on the retrieved food item properties.

8. A computer-implemented method according to claim 5, wherein the algorithm has the priority rank of the food items, starting with the highest ranked property:
- stacking ability and/or height,
- material and/or material strength,
- weight,
- temperature,
- texture.

9. A computer-implemented method according to any of the preceding claims, wherein the method further comprises the steps of:
- assigning oversized food items as non-packaging, and/or
- leaving out oversized food items.

10. A computer-implemented method according to any of the preceding claims, wherein the method further comprises the step of:
- assigning a separate packaging area for oversized food items.

11. A computer-implemented method according to any of the preceding claims, wherein, when generating the packaging sequence, the step of arranging the food item comprises positioning the food item as close as possible to a corner of the transport packaging.

12. A computer-implemented method according to any of the preceding claims,
wherein the method further comprises the steps of:
- providing a decentralized position of a packed order with an order ID,
- providing a repositioned centralized position of the packed order, and
- preferably sending final position of the packed order to a pick-up and/or delivery system.

13. A computer-implemented method according to any of the preceding claims, wherein the method further comprises the steps of:
- providing a machine-learning model for improving the determination of a packaging sequence of food items, and
- training the machine-learning model.

14. Use of the computer-implemented method according to any of the preceding claims for determining of a packaging sequence of food items in a food packaging system.

15. A computer-readable medium, preferably a storage medium, comprising instructions which, when executed by a computer, cause the computer to carry out one or more steps of the method of claim 1-13.
